Europäisches Patentamt

European Patent Office

Office européen des brevets

(11) Veröffentlichungsnummer: **0 585 642 A1**

## EUROPÄISCHE PATENTANMELDUNG

(21) Anmeldenummer: **93112521.5**

(22) Anmeldetag: **05.08.93**

(51) Int. Cl.⁵: **H04B 7/08**, H04N 5/44

(30) Priorität: **29.08.92 DE 4228840**

(43) Veröffentlichungstag der Anmeldung:
**09.03.94 Patentblatt 94/10**

(84) Benannte Vertragsstaaten:
**BE FR GB IT NL**

(71) Anmelder: **LOEWE OPTA GMBH**

**D-96305 Kronach(DE)**

(72) Erfinder: **Fischer, Gerhard, Dipl.-Ing.**
**Lichtenfelser Strasse 1**
**D-96317 Kronach(DE)**

(54) **Antennendiversity.**

(57) Bei einem Antennendiversity-Verfahren zum Empfang von AM-modulierten Fernsehsignalen mittels mindestens zweier Antennen ist vorgesehen, daß die Antennensignalspannung von den Antennen über elektronische Umschalter einem gemeinsamen Empfänger zugeführt wird, wobei die Antennen in Abhängigkeit von bestimmten Signalkriterien über eine Vorrangschaltung angesteuert werden. Mittels eines Komparators in einer Meßvorrichtung wird der Mittelwert oder ein bestimmter eingestellter Schwellenwert mit der während kurzer Tastperioden gemessenen Feldstärkedifferenz verglichen.
In Abhängigkeit davon wird ein Steuersignal zum Steuern des Umschalters für die Antennen generiert.

Rank Xerox (UK) Business Services
(3.10/3.09/3.3.4)

Die Erfindung betrifft ein Antennendiversity-Verfahren gemäß dem Oberbegriff des Anspruchs 1 sowie eine Schaltungsanordnung zur Durchführung des Verfahrens.

Antennendiversity-Verfahren sind für FM-modulierte Signale in verschiedenen Ausführungen bekannt. Beispielhaft wird auf die DE 36 44 087 A1 und die DE 36 41 109 A1 verwiesen. Die darin angegebenen Antennendiversity-Verfahren für FM-modulierte Signale sind für AM-modulierte Fernsehsignale nicht einsetzbar.

Der Erfindung liegt die Aufgabe zugrunde, ein wirtschaftliches, mit geringem Schaltungsaufwand realisierbares Antennendiversity-Verfahren zum Empfang von AM-modulierten Fernsehsignalen anzugeben, das zuverlässig arbeitet und für die Messung größtenteils auf im Empfänger vorhandene Baugruppen zuzugreifen gestattet.

Erfindungsgemäß wird die Aufgabe durch Verfahrensschritte gelöst, wie sie im Anspruch 1 angegeben sind.

Vorteilhafte Weiterbildungen des Verfahrens sind in den Ansprüchen 2 bis 12 angegeben.

Eine Schaltungsanordnung zur Durchführung des Verfahrens ist im Anspruch 13 angegeben, vorteilhafte Weiterbildungen der Schaltung in den Ansprüchen 14 und 15.

Die Erfindung geht davon aus, die Messung während eines Zyklus aus dem Fernsehsignal vorzunehmen, in dem der Träger nicht oder gleichförmig moduliert ist, beispielsweise auf den Schwarzwert, den Weißwert oder auf einen bestimmten Grauwert eingestellt ist. Vorteilhaft ist es, den Schwarzwert für die Messung heranzuziehen. Die Messung selbst erfolgt innerhalb einer Zeilendauer des Fernsehsignals, beispielsweise nach dem PAL-System mit 625 Zeilen innerhalb einer Zeilendauer von 52 $\mu$s. Das Meßprinzip beruht auf einem DC-Pegelvergleich, also einem Differenzmeßverfahren während der Meßperiode, bei dem durch kurzzeitiges Umschalten von einer Antenne auf die andere der Differenzwert zum Mittelwert der vorherigen Antenne oder gegenüber einem eingestellten Schwellenwert unmittelbar festgestellt wird. Dieser Differenzwert wird mit dem ermittelten Mittelwert der gesamten Zeile oder mit einem vorgegebenen Schwellenwert verglichen. Je nach Norm können dabei die Vergleichswerte positives Potential oder negatives Potential aufweisen, wobei in Abhängigkeit von der Abweichung in positiver oder negativer Richtung ein Schaltkriterium erzeugt wird, das die Schalteranordnung der Antennen steuert und jene Antenne anschaltet, die aufgrund der Differenzwertmessung die höhere Feldstärke aufweist.

Zum Verständnis des Verfahrens sei ergänzend angegeben, daß die augenblickliche Messung während des Meßzyklus beim Umschalten auf die andere Antenne immer auf den Mittelwert der vorher eingestellten Antennen erfolgt oder gegenüber dem Schwellenwert. Schaltet infolge des kurzen Meßzyklus des festgestellten höheren Pegels der Umschalter auf die zweite Antenne um, so wird für die weitere Abtastung der in Abhängigkeit ermittelte Mittelwert bzw. der dieser Antenne zugeordnete Schwellenwert als Vergleichskriterium zur Differenzbildung für den nächsten Meßzyklus herangezogen.

Im Fall, daß der Mittelwert herangezogen wird, ist quasi die eine Feldstärke in der Regelspannung des Tuners gespeichert. Aus diesem Grunde muß die Regelzeitkonstante der Empfängerschaltung (Tuner + ZF-Verstärker) wesentlich größer als der Meßzyklus sein, wie dies im Anspruch 1 angegeben ist.

Versuche mit dem erfindungsgemäßen Verfahren haben gezeigt, daß dieses Verfahren problemlos und zuverlässig arbeitet, insbesondere dann, wenn die Meßzyklen halbbildweise jeweils vorgenommen werden. Das Verfahren ist auf mehrere Antennenanlagen, also eine Diversity-Anlage mit mehr als zwei Antennen, gleichsam anwendbar, wobei für jede Meßperiode eine Halbbildperiode zugrundezulegen ist. Dieses ist erforderlich, um den Tuner nach dem Umschalten an eine andere Antenne ausregeln lassen zu können, um durch die Tunerregelung auch dann, wenn ein Schwellenwert als Vergleichswert angesetzt ist, keine Auswerteverfälschungen zu erhalten. Das bedeutet, daß bei Verwendung von vier Antennen ein Meßzyklus zur Feststellung der optimalen Antenne insgesamt in drei Halbbildern erfolgt, da zu Beginn des Meßzyklus ohnehin die Anlage an eine Antenne bereits angeschaltet ist und diese im Vergleich zur nächsten als optimal angesehen wird.

In der praktischen Ausführung hat sich gezeigt, daß das Meßverfahren in gleicher Weise einsetzbar ist, wenn eine Schwarzwertmessung durchgeführt wird oder die Messung anhand eines gleichförmigen modulierten Signals, beispielsweise wenn das Zeilensignal mit einem Weißwert oder einem bestimmten Grauwert moduliert ist. Auch in diesem Fall arbeitet die Schaltung problemlos, wenn für die Auswertung der Mittelwert herangezogen wird. Im Falle der Verwendung eines Schwellenwertes zur Vergleichsmessung muß ein bestimmter Pegel festgelegt werden, der einem Referenzfeldstärkepegel entspricht.

Bekanntlich wird nach der L-Norm das Signal negativ moduliert, so daß für diese Norm umgekehrte Verhältnisse gegeben sind wie bei den übrigen Fernsehnormen. Dem tragen die Verfahrensschritte, die in den Ansprüchen 6 und 7 angegeben sind, Rechnung. In Abhängigkeit von der jeweiligen Norm, die empfangen wird, muß deshalb die Vergleichsschaltung angepaßt werden. Dies kann in einfacher Weise dadurch geschehen, daß für die beiden Normen gesonderte Komparatoren vorgesehen sind, die in Abhängigkeit von der jeweiligen Norm angeschaltet werden, zu welchem Zweck - verbunden mit der Abstimmschaltung und der Steuereingabe - ein Schaltsignal an einen Umschalter gelegt wird, der entweder den für die L-Norm vorgesehenen Komparator mit umgekehrten Potentialeingängen oder aber den anderen Komparator, der für die übrigen Normen ausgelegt ist, anschaltet. Die Umschaltung wird gesteuert durch die in der Empfängerschaltung des Fernsehempfängers im Speicher mit abgelegten Daten der entsprechenden Norm. Die Daten können automatisch während des Suchlaufs ermittelt und abgespeichert oder manuell eingegeben werden.

Generell ist das Verfahren einsetzbar, wenn die Auswertung der Information während der Zeilendauer einer nicht sichtbaren Zeile oder im Signalbereich des nicht sichtbaren Teils erfolgt. In einer praktischen Ausführung wird eine nicht sichtbare Zeile verwendet, die beim PAL-System 52 $\mu$ s beträgt. Zweckmäßigerweise sollte der Meßzyklus in diesem Fall ca. 4 $\mu$ s betragen. Er kann aber auch abweichend hiervon kleiner sein. Ebenso können die Meßzyklen periodisch oder aperiodisch erfolgen.

Bei der Messung innerhalb einer nicht sichtbaren Zeile des Bildes kann nur eine solche Zeile herangezogen werden, die nicht modulierte Signale oder gleichförmig modulierte Signale enthält. Dies ist z.B. nach der PAL-Norm die Zeile 6. Es gibt jedoch auch Sender, die andere Zeilen unmoduliert belassen. Es ist aber auch möglich, über die Auswahlschaltung eine Zeile feststellen zu lassen oder vorzugeben, die mit der Zeile 6 nicht übereinstimmt und unmodulierte Signale enthält. Für den Fall des automatischen Aufsuchens und Erkennens einer solchen Zeile gemäß Anspruch 11 empfiehlt es sich im Falle des Auffindens einer solchen, diese in einem Speicher für wiederholte Messungen festzuhalten. Erst wenn festgestellt wird, daß das Fahrzeug sich in einem Empfangsbereich befindet, in dem diese Zeile wiederum belegt ist, könnte eine erneute Abfrage und Detektion einer Zeile mit nicht oder gleichförmig modulierten Signalen erfolgen.

Der wesentliche Vorteil der Erfindung liegt darin, daß am AM-Demodulatorausgang der Empfängerschaltung die Signale, nämlich das FBAS-Signal für die Messung, herausgezogen werden können. Es werden also keine zusätzlichen Empfängerschaltungen notwendig, um eine Bewertung der Empfangspegel vornehmen zu können. Darüber hinaus ist die Meßschaltung abgleichfrei, da die Empfängerschaltung ohnehin schon abgeglichen ist und eine weitere Empfängerschaltung hierfür nicht abgeglichen werden muß. Die Erfindung ist aber auch dann einsetzbar, wenn eine gesonderte Empfängerschaltung für die Messung vorgesehen ist. Wegen der Redundanzen, die dann allerdings gegeben sind, und der Kostennachteile wird sinnvollerweise die Schaltung so ausgelegt, daß sie mit einer Empfängerschaltung auskommt.

Die Erfindung wird nachfolgend anhand eines Ausführungsbeispiels, das in dem einzigen Schaltplan dargestellt ist, näher erläutert.

In dem Schaltbild sind zwei Antennen 2 und 3 eingangsseitig der Meßschaltung angegeben. Die Antenne 1 ist mit dem Bezugszeichen 2, die Antenne 2 mit dem Bezugszeichen 3 versehen. Beide Antennen sind über Diodenumschalter 6 und 7, die mit entgegengesetzter Polarität zusammengeschaltet sind, miteinander verbunden, wobei die Anoden jeweils mit den Antennen und die Katoden an dem gemeinsamen Verbindungspunkt angekoppelt und gegen Masse geschaltet sind. Die Masseverbindung mit dem Widerstand 10 dient dazu, die jeweilige Schaltdiode 6 oder 7, die leitend geschaltet ist, in Durchflußrichtung mit einem definierten Flußstrom zu betreiben. HF-mäßig ist der Koppelpunkt der beiden Dioden über einen Entkopplungskondensator 11 mit der Empfängerschaltung 8 verbunden. Die einzelnen Antennen 2 und 3 sind gleichstrommäßig über Koppelkondensatoren 12 und 13 von der übrigen Schaltung entkoppelt. Die Empfängerschaltung 8 besteht bekanntlich aus einem Tuner, der nicht näher dargestellt ist, einem ZF-Verstärker und einem AM-Demodulator sowie Abstimmansteuerschaltungen. Am Ausgang der Empfängerschaltung 8 liegt das FBAS-Signal an, das der Meßschaltung 1 zugeführt wird. Diese Meßschaltung besteht aus einem ersten Integrator zur Feststellung des Mittelwertes des demodulierten Signals. Dieser Integrator weist einen Widerstand 14, einen Ladekondensator 15 und einen parallel hierzu, gegen Masse geschalteten Widerstand 16 auf, über den die Schwelle gewünscht einstellbar ist. Der Ausgang des Integrators, an dem unter der Annahme, daß es sich hier um eine Meßschaltung für Normsignale außer der L-Norm handelt, liegt an dem positiven Eingang eines Komparators 4, der ein schneller Komparator ist. Das FBAS-Signal liegt weiterhin an dem zweiten Eingang des Komparators 4 an, und zwar über einen Tiefpaßfilter mit einem Widerstand 17 und einem gegen Masse geschalteten Kondensator 18. Dieser Tiefpaßfilter dient dazu, hochfrequente Störimpulse während des Meßzyklus zu unterdrücken.

Während des Meßzyklus, z.B. von 4 $\mu$ s innerhalb der Zeilenperiode, liegt ein FBAS-Signal von der anderen Antenne 2 kurzzeitig an. Dieses Signal wird mit dem Mittelwertsignal in dem Komparator 4 am Eingang 7 verglichen. Unterschreitet z.B. bei der PAL-Norm der gemessene Wert während der Tastung den Mittelwert, so wird am Ausgang des Komparators 4 ein positives Signal erzeugt, das dem einen Eingang eines nachgeschalteten AND-Gatters 19 zugeführt ist. An dem zweiten Eingang dieses AND-Gatters liegt das Umschaltsignal während des Meßzyklus an. Liegen beide Signale als Positivsignale an, so wird am Ausgang des AND-Gatters ein Schaltsignal ausgegeben, das den Flipflop 5 des Umschalters steuert, über dessen beide Ausgänge Q und $\overline{Q}$ jeweils die eine Antenne 2 oder die andere Antenne 3 in Abhängigkeit von der besseren Empfangseigenschaft angeschaltet wird. Unter der Annahme, daß die Empfangseigenschaften der ersten Antenne sich negativ verändert haben und die zweite Antenne während des Meßzyklus bessere Empfangseigenschaften aufweist, liegt während des Meßzyklus ein positives Ausgangssignal am AND-Gatter 19 an und schaltet den Flipflop 5 derart, daß der Ausgang Q1 von 1 (H) auf O (L) umschaltet, während der Ausgang $\overline{Q1}$ zur Ansteuerung der Diodenschalters 7 der zweiten Antenne 3 von Low Potential (0) auf High Potential (1) umschaltet. Die Umschaltung der Antennen 2 oder 3 erfolgt also auch in Abhängigkeit vom Anliegen eines Schaltimpulses während der Meßphase, wobei die Ausgangssignale des Flipflops jeweils einem Exklusiv-ODER-Gatter 20, 21 zugeführt werden, an deren zweiten Eingängen außerhalb des Meßzyklus ein 0-Potential liegt. Liegt somit beispielsweise an dem Exklusiv-ODER-Gatter 21 das angesprochene H-Signal an dem anderen Eingang und kein Tastsignal (0) an, so wird die Diode 7 leitend und umgekehrt über das Exklusiv-ODER-Gatter 20 die erste Diode 6 sperrend geschaltet, so daß die Antenne 3 aktiv und die Antenne 2 passiv geschaltet ist. Während der Tastzeit erfolgt eine statische Umschaltung noch nicht sondern erst, wenn der Flipflop 5 umgeschaltet hat. Unter der Annahme der angesprochenen Auswertung, daß der Meßwert den Mittelwert überschreitet, wird also über das Ausgangssignal des AND-Gatters 19 der Flopflop 5 auf $\overline{Q1}$ umgeschaltet, d.h. an seinem Ausgang liegt nunmehr ein H-Signal, während die Tastung beendet ist und an dem weiteren Eingang des Exklusiv-ODERs 21 ein Low Signal anliegt, so daß am Ausgang das H-Signal stehenbleibt. Automatisch ist sowohl während der Messung als auch im umgeschalteten Zustand die Antenne 1 über die Diode 6 gesperrt, da diese nicht leitend geschaltet ist und der Ausgang des Exklusiv-ODERs 21 0 Potential aufweist. Die Auswahlschaltung 9 ist ein dekadischer Zähler, mit dem durch Anliegen der H- und V-Synchronimpulse die Zeile 6 als Informationszeile getastet wird. Die Meßzeit wird durch den am Ausgang 6 angeschlossenen Monoflop aus dem Längs-Kondensator 22, dem Schmitt-Trigger 23 und dem die Zeit bestimmenden Widerstand 24 bestimmt. Es handelt sich dabei um eine von der Auswahlschaltung 9 gesteuerte Ladeschaltung, der ein Schmitt-Trigger 32 zur Impulsformung nachgeschaltet ist. Die Entkoppeldiode 25 verhindert ein unerwünschtes Reagieren des AND-Gatters 19 im Falle der an liegenden Störimpulse.

Die Erfindung ist nicht nur auf das dargestellte Ausführungsbeispiel beschränkt. Für die Meßschaltungen und die übrigen Schaltungskomponenten bieten sich andere Schaltungskonfigurationen bekannter Art an. Insbesondere kann auch von einer Mittelwerterfassung Abstand genommen werden. In diesem Fall liegt am Komparator 4 am unteren Eingang 7 ein fest eingestellter Schwellenwert an, gegenüber dem die Messung erfolgt.

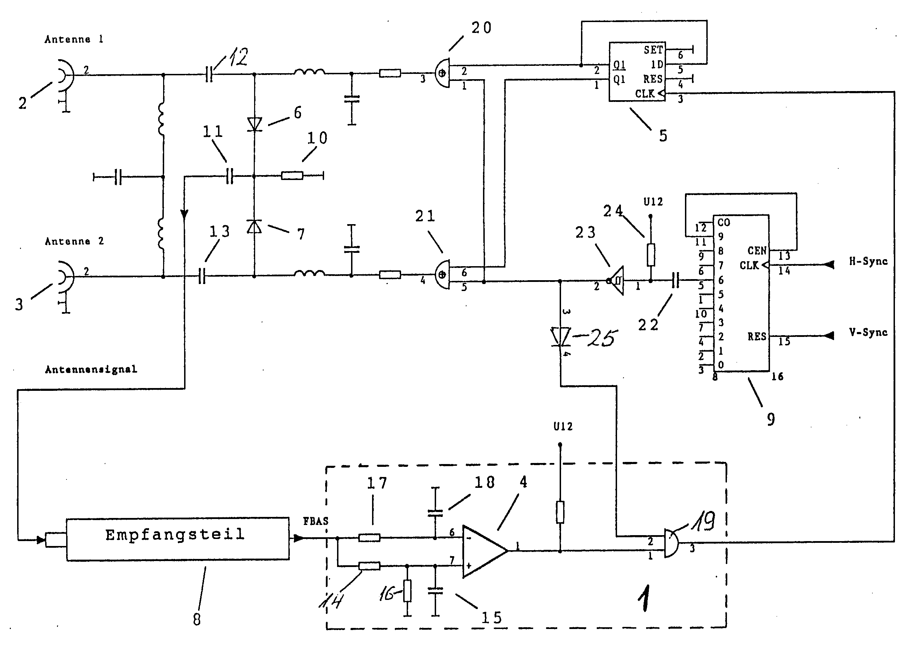

**Patentansprüche**

1. Antennendiversity-Verfahren zum Empfang von AM-modulierten Fernsehsignalen mittels mindestens zweier Antennen, bei welchem die Antennensignalspannung von den Antennen einem gemeinsamen Empfänger über elektronische Umschalter zugeführt wird, die in Abhängigkeit von bestimmten Signalkriterien über eine Vorrangschaltung angesteuert werden, **dadurch gekennzeichnet**, daß eine Meßvorrichtung (1) während eines Zeilen- oder Bildintervalls in Abhängigkeit von gemessenen bestimmten Signalkriterien innerhalb des nicht sichtbaren Bildbereiches während einer kurzen Tastperiode von der gegenwärtig angeschalteten Antenne auf die zweite oder mehrere vorhandene Antennen nacheinander umschaltet, und daß die Meßvorrichtung (1) den gemittelten Wert des empfangenen Schwarzsignals mit dem Gleichstromwert während der augenblicklichen Abfrage des Signals an einer der anderen Antennen vergleicht, und daß bei Abweichen eines geringfügig unterhalb des gemittelten Wertes oder eines oberhalb desselben festgelegten Schwellenwertes eine Umschaltung auf die andere Antenne (2 oder 3) erfolgt, die gegenwärtig nicht eingeschaltet ist, wobei bei mehr als zwei Antennen (2, 3) unter Anwendung des gleichen Verfahrensschrittes ein Vergleich innerhalb der Zeilendauer oder der Bildsignale im unsichtbaren Teil des Bildes nacheinander erfolgt und die Regelzeitkonstante der Empfängerschaltung größer gegenüber den Meßintervallen ist.

2. Antennendiversity-Verfahren nach Anspruch 1, dadurch gekennzeichnet, daß mittels der Meßvorrichtung (1) während einer Zeilendauer, innerhalb der der Träger des Fernsehsignals nicht moduliert ist (während einer schwarzen Zeile oder während der Zeit der vertikalen Bildaustastung) oder gleichförmig moduliert ist (Weiß- oder Grauwert), die Gleichstromwerte der Abfragen miteinander verglichen werden.

3. Antennendiversity-Verfahren nach Anspruch 1 oder 2, dadurch gekennzeichnet, daß eine von der Vergleichsschaltung (4) gesteuerte Schalteinrichtung (5, 6, 7) vorgesehen ist, die mit Erkennen der Abweichung - standardmäßig bedingte Über- oder Unterschreitung des Gleichstromwertes - des Gleichstromwertes der vorherigen Abfrage die für die folgende Abfrage angeschaltete Antenne (2 oder 3) an die Empfängerschaltung (8) anschaltet und die vorherige abschaltet.

4. Antennendiversity-Verfahren nach Anspruch 3, dadurch gekennzeichnet, daß im Falle der Umschaltmöglichkeit auf drei oder mehrere Antennen der Vergleich zwischen den Meßwerten der folgenden Antennen mit den Meßwerten der im vorigen Vergleich angeschalteten Antennen durchgeführt wird.

5. Antennendiversity-Verfahren nach einem der vorhergehenden Ansprüche, dadurch gekennzeichnet, daß mit jedem Halbbild ein Meßzyklus erfolgt.

6. Antennendiversity-Verfahren für den Empfang von Fernsehsignalen, die nach der L-Norm ausgestrahlt werden, dadurch gekennzeichnet, daß der durch Abtastung ermittelte Pegelsprung positiv ist und in einer Komparatorschaltung mit einem positiven Schwellenwert verglichen wird.

7. Antennendiversity-Verfahren nach einem der Ansprüche 1 bis 5 zum Empfang von AM-modulierten Signalen, die nach Fernsehnormen, außer der L-Norm, ausgestrahlt werden, dadurch gekennzeichnet, daß der negative Meßwert mit einem geringfügig unterhalb des ermittelten Schwarzwertes der gegenwärtig eingeschalteten Antenne abgeleiteten Schwellenwertes die Umschaltung auf die andere Antenne auslöst.

8. Antennendiversity-Verfahren nach einem der vorhergehenden Ansprüche, dadurch gekennzeichnet, daß innerhalb der maximalen Zeitdauer des nicht sichtbaren Bildbereiches die Meßzeit variiert wird.

9. Antennendiversity-Verfahren nach Anspruch 8, dadurch gekennzeichnet, daß bei einer Zeilendauer von 52 $\mu$ s der Meßzyklus ca. 4 $\mu$ s beträgt.

10. Antennendiversity-Verfahren nach einem der vorhergehenden Ansprüche, dadurch gekennzeichnet, daß das Meßsignal am Ausgang des vorhandenen Videodemodulators der Empfängerschaltung (8) abgegriffen wird.

11. Antennendiversity-Verfahren nach einem der vorhergehenden Ansprüche, dadurch gekennzeichnet, daß über eine Auswahlschaltung (9) eine bestimmte Zeile des empfangenen Fernsehsignals für die Messung ausgewählt wird.

12. Antennendiversity-Verfahren nach Anspruch 11, dadurch gekennzeichnet, daß in einer Speicherschaltung der Empfängerschaltung (8) mehrere abtastbare Zeilen des zu empfangenen Fernsehsignals abgespeichert sind, und daß eine Erkennungsschaltung vorgesehen ist, die von dem Inhalt des Speichers nacheinander zur Selektion der Inhalte der einzelnen Zeilen angesteuert wird, bis die Schaltung erkennt, daß die empfangenen Signale einer ausgewählten Zeile keine modulierten Informationen oder gleichförmig modulierte Informationen aufweisen, und sodann auf die ausgewählte Zeile für die weiteren Messungen festrastet, solange bis eine Umschaltung auf einen anderen Sender erfolgt, wobei sodann die Abfrage der Zeileninhalte erneut von einer Steuereinrichtung der Empfängerschaltung abgefragt wird.

12. Antennendiversity-Verfahren nach Anspruch 11, dadurch gekennzeichnet, daß eine Mikroprozessorsteuereinrichtung in der Empfängerschaltung (8) vorgesehen ist, die die Abfrage der Zeileninhalte des empfangenen TV-Signals nach modulierten Signalen im Bereich der nicht sichtbaren Zeilen unter einer vorgegebenen Auswahlmöglichkeit von Zeilen durchführt.

13. Schaltungsanordnung zur Durchführung des Verfahrens nach Anspruch 1, gekennzeichnet durch eine Auswahlschaltung (9), die eine bestimmte Zeile aus dem nicht sichtbaren Bildteil selektiert, die keine modulierten Nutzsignalinformationen oder gleichförmig modulierte Informationen enthält, eine Meßschaltung (1), die während einer kurzen Tastperiode die Feldstärkedifferenz zwischen je zwei Antennen (2, 3) ermittelt, eine Komparatorschaltung (4), die den während der Tastperioden ermittelten Differenzwert mit dem Mittelwert des Zeilensignals oder dem Schwellenwert vergleicht, einen Umschalter (6, 7, 8), der jeweils in Abhängigkeit von dem Komparatorausgangssignal auf jene Antennen umschaltet, an der augenblicklich der höhere Empfangspegel anliegt.

14. Schaltungsanordnung nach Anspruch 13, dadurch gekennzeichnet, daß die selektierte Zeile an dem im Gerät vorhandenen AM-Demodulator-Ausgang der Empfängerschaltung abgreifbar ist und die Meßschaltung die Zeile auswertet.

15. Schaltungsanordnung nach Anspruch 13 oder 14, dadurch gekennzeichnet, daß die Schaltung so dimensioniert ist, daß die Regelzeitkonstante der Empfängerschaltung wesentlich länger als der Meßzyklus zur Ermittlung des Differenzsignals ist.

| | **EINSCHLÄGIGE DOKUMENTE** | | EP 93112521.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl.⁵) |
| X | DE - A - 3 926 336 (LINDENMEIER) * Fig. 1-3; Spalte 3, Zeilen 1-35; Spalte 4, Zeilen 15-67; Spalte 9, Zeilen 50-59 * | 1-3,5, 10 | H 04 B 7/08 H 04 N 5/44 |
| A | | 4,9, 12-15 | |
| A | DE - A - 4 006 295 (KRAUSS-MAFFEI) * Fig. 1; Zusammenfassung * ---- | 1 | |

| | RECHERCHIERTE SACHGEBIETE (Int Cl.⁵) |
|---|---|
| | H 04 B H 04 N |

Der vorliegende Recherchenbericht wurde für alle Patentansprüche erstellt.

| Recherchenort | Abschlußdatum der Recherche | Prüfer |
|---|---|---|
| WIEN | 13-12-1993 | DRÖSCHER |